(19) **Europäisches Patentamt / European Patent Office / Office européen des brevets**

(11) **EP 4 174 520 B1**

(12) **EUROPEAN PATENT SPECIFICATION**

(45) Date of publication and mention
of the grant of the patent:
**22.04.2026   Bulletin 2026/17**

(21) Application number: **21204757.5**

(22) Date of filing: **26.10.2021**

(51) International Patent Classification (IPC):
*G01S 13/72* (2006.01)     *G01S 17/66* (2006.01)
*G01S 13/42* (2006.01)     *G01S 17/42* (2006.01)
*G01S 13/931* (2020.01)     *G01S 17/931* (2020.01)

(52) Cooperative Patent Classification (CPC):
**G01S 13/42; G01S 13/726; G01S 13/931;
G01S 17/42; G01S 17/66; G01S 17/931**

(54) **METHOD AND DEVICE FOR TRACKING OBJECTS AND DRIVER ASSISTANCE SYSTEM**

VERFAHREN UND VORRICHTUNG ZUR VERFOLGUNG VON OBJEKTEN UND
FAHRERASSISTENZSYSTEM

PROCÉDÉ ET DISPOSITIF DE SUIVI D'OBJETS ET SYSTÈME D'ASSISTANCE AU CONDUCTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.05.2023   Bulletin 2023/18**

(73) Proprietor: **Robert Bosch GmbH
70442 Stuttgart (DE)**

(72) Inventors:
• **REMENYI, Istvan
  2890 Tata (HU)**
• **KARASZ, Zoltan
  1141 Budapest (HU)**

(56) References cited:
**US-A1- 2016 103 213     US-A1- 2021 080 558
US-B1- 10 936 902**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Processed by Luminess, 75001 PARIS (FR)

## Description

The present invention relates to a method and a device for tracking objects in a surrounding of a vehicle. The invention further relates to a driver assistance system.

Prior Art

Driver assistance systems rely on the detection of objects in a surrounding of the vehicle. Modem vehicles can comprise multiple sensors of different types, such as radar sensors, cameras, infrared sensors, lidar sensors and the like. US 10 936 902 B1 relates to training bounding box selection. US 2021/0080558 A1 relates to extended object tracking using radar. US 2016/0103213 A1 relates to 3D tracking of objects in a radar system.

Based on the sensor data, objects can be identified. For example, a radar sensor can emit radar signals which are reflected by objects in a surrounding of the vehicle. The coordinates of the reflecting objects can be determined by analyzing the received radar signals. Each of the recognized objects can be tracked over time. For example, the moving directions or velocities of the tracked objects can be determined. Such information is important to estimate the likelihoods of possible events, such as a possible collision with another vehicle. Based on this information, the driver assistance systems can inform the driver of possibly dangerous situations or can control functions of the vehicle, such as an adjustment of the speed or the steering angle of the vehicle.

For tracking objects, newly detected measurements must be associated with already tracked objects, if possible. Tracking solutions are taking care of the association problem between objects detected in a subsequent frame by creating dynamic entities with a predefined lifespan. Although there are various solutions, due to the computation resource limitations, usually modeling assumptions have to be introduced. Filtering techniques (like Kalman filtering) can give a procedure-skeleton to such assumptions, in which the main steps are the following: prediction of the state of the observed objects for the next timestamp, the association between the predicted state of the object and the measurement in the next timestamp, and an update of the state of the observed object for further tracking.

Disclosure of the Invention

The present invention provides a method and a device for tracking objects in a surrounding of a vehicle, and a driver assistance system, as recited in the independent claims.

Preferred embodiments are set out in the dependent claims.

According to a first aspect, the invention therefore relates to a device for tracking objects in a surrounding of a vehicle, comprising an interface configured to receive, from at least one vehicle sensor of the vehicle, newly acquired measurement data. The device further comprises a computing device. The computing device is configured to determine time coordinates and spatial coordinates of newly measured objects in a surrounding of the vehicle based on the newly acquired measurement data, wherein the spatial coordinates of the newly measured objects are defined relative to a global coordinate system. The computing device is further configured to associate each newly measured object with at most one tracked object of a plurality of tracked objects based on distances between the newly measured object and the plurality of tracked objects, wherein the distance depends on both a difference between the spatial coordinates of the newly measured object and the tracked object and a difference between the time coordinates of the newly measured object and the tracked object. The computing device updates spatial coordinates of the tracked objects using a Kalman filtering method, using the associated newly measured objects.

According to a second aspect, the invention provides a driver assistance system for a vehicle, comprising at least one vehicle sensor of the vehicle configured to acquire measurement data, and a device for tracking objects in a surrounding of a vehicle according to the first aspect of the invention.

According to a third aspect, the invention relates to a method for tracking objects in a surrounding of a vehicle. The method comprises receiving, from at least one vehicle sensor of the vehicle, newly acquired measurement data and determining time coordinates and spatial coordinates of newly measured objects in a surrounding of the vehicle based on the newly acquired measurement data, wherein the spatial coordinates of the newly measured objects are defined relative to a global coordinate system. The method further comprises associating each newly measured object with at most one tracked object of a plurality of tracked objects based on distances between the newly measured object and the plurality of tracked objects, wherein the distance depends on both a difference between the spatial coordinates of the newly measured object and the tracked object and a difference between the time coordinates of the newly measured object and the tracked object; and updating spatial coordinates of the tracked objects using a Kalman filtering method, using the associated newly measured objects.

Advantages of the invention

The present invention applies a space-time input representation and a modification to the association step. By using a distance which depends both on spatial coordinates and time coordinates, tracking is more robust to object movement. An improved object detector performance can be achieved. The tracking can be achieved in a space-time representation, where the distance metric is applied. Further, movement-dependent linear patterns and their recognition can be used.

Relying on the output of multiple kinds of object detectors - wherein each detector's output is transformed into the global coordinate system - one stream of detections can be produced.

When the ego vehicle's movement is properly tracked by transforming the object detectors' frames (i.e., coordinates) taken at different time instants into a common coordinate system, and a proper multi-dimensional representation is chosen (2D/3D Cartesian coordinates and a time-like attribute), movement-dependent linear patterns can be formed for each object. Also, if these patterns are detected, their speed and momentum can be calculated to stabilize the classification itself.

According to the invention, the distance D (i.e. metric) between a newly measured object and a tracked object is computed by the following formula:

$$D^2 = dx^2 + dy^2 + dz^2 - (vt)^2, \qquad (1)$$

wherein *dx, dy* and *dz* denote differences between the spatial coordinates of the newly measured object and the tracked object for three orthogonal axes of the global coordinate system, wherein v denotes a velocity of the vehicle, and wherein t denotes a difference between the temporal coordinate of the newly measured object and the tracked object.

That is, the distance response to a space-time interval. The distance is selected in a way that static objects (i.e., moving with the speed of the vehicle) have zero distance. The association of the object therefore takes the movement of the vehicle into account by using a distance which takes care of the ego vehicle movement. This leads to a more robust association. Also, by applying the above formula for the distance, asynchronous measurements merged into one continuous input stream can be handled, as a way of multimodal late-fusion technique. For the multimodal setup, a synchronization method may be present (e.g., timestamp-based).

According to a further embodiment of the device, the computing device is configured to determine the global coordinate system as a current pose of the vehicle, based on a current velocity of the vehicle. After each measurement cycle, the global coordinate system can be recomputed.

According to a further embodiment of the device, the computing device is configured to associate the newly measured object with the at most one tracked object using the Hungarian method. Herein, the above metric defined in formula (1) can be used instead of a conventional Euclidean metric.

According to a further embodiment, the device further comprises a first-in first-out, FIFO, memory device, wherein the computing device is configured to store the time coordinates and spatial coordinates of newly measured objects in the FIFO memory device. For an efficient space-time representation, multiple past frames (i.e., time coordinates and spatial coordinates) can be kept.

According to a further embodiment of the device, the computing device is further configured to transform spatial coordinates of the plurality of tracked objects into the global coordinate system before associating each newly measured object with at most one tracked object of the plurality of tracked objects. Therefore, the newly measured objects can easily be associated with the tracked object

According to a further embodiment of the device, the computing device is further configured to generate a new tracked object based on a newly measured object if said newly measured object is not associated with any tracked object of the plurality of tracked objects. Therefore, the list of tracked objects can be extended.

According to a further embodiment of the device, the computing device is further configured to delete a tracked object of the plurality of tracked objects if no newly measured object is associated with the tracked object. Therefore, objects no longer present in the field of view of the at least one vehicle sensor can be deleted. Such objects are generally no longer relevant for driver assistance systems or the like.

Short description of the drawings

Figure 1    shows a block diagram of a driver assistance system comprising a device for tracking objects in a surrounding of a vehicle according to an embodiment of the invention;

Figure 2    shows a schematic illustration of tracked objects; and

Figure 3    shows a flow chart of a method for tracking objects in a surrounding of a vehicle according to an embodiment of the invention.

The numbering of process steps is for clarity and is generally not intended to imply any particular chronological order. **In** particular, several process steps can also be carried out simultaneously.

Description of the embodiments

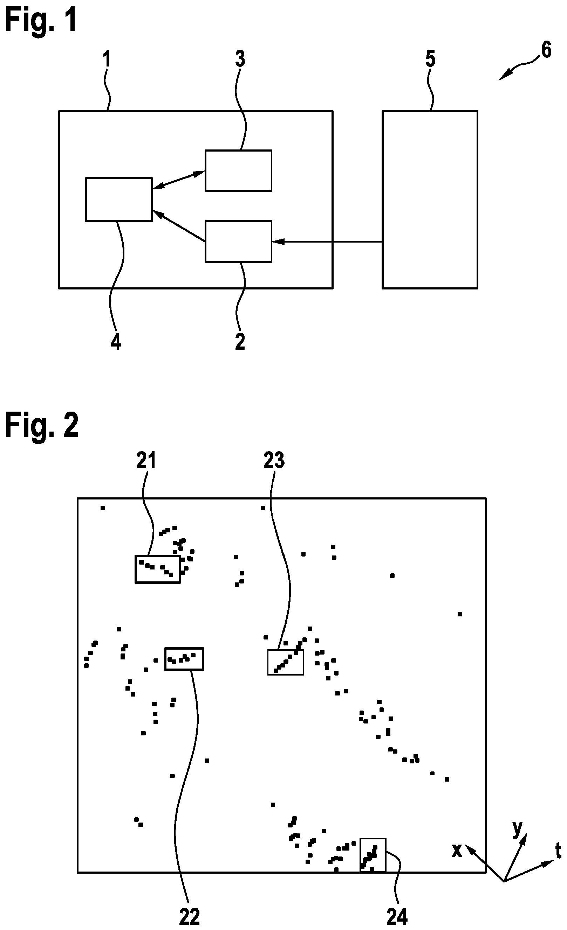

Figure 1 shows a block diagram of a driver assistance system 6 comprising a device 1 for tracking objects in a surrounding of a vehicle. The device 1 comprises an interface 2 which communicates with one or more vehicle sensors 5 of the vehicle. Preferably, the vehicle sensors may comprise at least one radar sensor. The vehicle sensors 5 can also comprise sensors like cameras, lidar sensors, infrared sensors and the like.

The interface 2 may communicate with the vehicle sensors 5 via a CAN bus or the like. The device 1 receives via the interface 2 newly acquired measurement data from the vehicle sensor 5. That is, after each measurement time (time stamp), newly acquired measurement data is provided to the device 1. The device 1 may receive raw data from the radar sensor 5. According to other embodiments, the data may already be preprocessed.

The device 1 comprises a computing device 4, such as a microprocessor, microcontroller, a programmable gate array, or the like. The computing device 4 determines time coordinates and spatial coordinates of newly measured objects in a surrounding of the vehicle based on the newly acquired measurement data. Herein, the term "newly measured object" relates to a particular measurement (i.e., within a present measurement cycle) of an object. The object can be an object already tracked by the device 1 or a new object.

The spatial coordinates of the newly measured objects are defined relative to a global coordinate system, which may be given as a current pose of the vehicle, e.g., based on a current velocity of the vehicle.

The computing device 4 associates each newly measured object with one or none tracked object of a plurality of tracked objects. At each time, multiple objects may be tracked, e.g., corresponding to further vehicles, barriers, road signs, pedestrians and so on.

The computing device 4 associates newly measured objects with a tracked object by computing for each tracked object a distance between the newly measured object and said tracked object. The distance is computed based on both a difference between the spatial coordinates of the newly measured object and the tracked object and a difference between the time coordinates of the newly measured object and the tracked object. According to the invention, the distance is computed using formula (1) above. In general, the difference between the time coordinates of the newly measured object and the tracked object corresponds to the time difference between two subsequent measurements.

The computing device 4 further updates the spatial coordinates of the tracked objects using a Kalman filtering method.

The computing device 4 may comprise a tracking pool for gathering the available Kalman filter instances, i.e., every tracked object has one corresponding instance.

The device 1 further comprises a first-in first-out, FIFO, memory device 3 which stores the time coordinates and spatial coordinates corresponding to several previously measured objects. Tracking means monitoring one stream that contains subsequent frames in which the detected objects are located. For the space-time representation, multiple past frames can be kept. If these frames are in the same global coordinate system, linear patterns can be captured. Further, the memory device 3 may store the global coordinate system.

Figure 2 shows a schematic illustration of tracked objects. Herein, there are moving objects 21 and 22 and static objects 23 and 24.

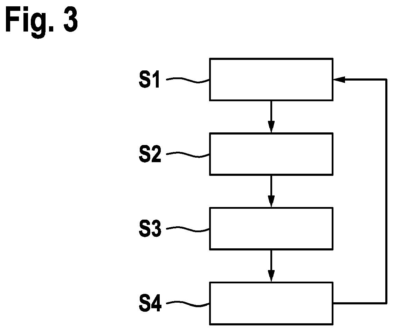

Figure 3 shows a flow chart of a method for tracking objects in a surrounding of a vehicle. The method can be carried out using the device 1 described above. Likewise, the device 1 can be configured to carry out any of the following method steps or aspects of the method.

**In** a step S1, tracking is initialized. Further, a tracking pool is initialized which may have an instance count of 0. Further, FIFO memory storage may be allocated. The size can be maximized, e.g., restricted to 5 frames. The current pose of the vehicle may be extracted and stored as a global coordinate system. However, the invention is not restricted to the vehicle coordinate system as a global coordinate system. According to other embodiments, different common global coordinate systems can be used. The memory storage may be relocated.

After a drift occurs in ego vehicle positioning, the global coordinate system changes. The current ego vehicle is then again extracted as a global coordinate system. All tracked objects from the tracking pool are transformed by transforming their spatial coordinates into the new global coordinate system. The new ego vehicle pose is stored as the global coordinate system.

Next, measurement initiates. The current ego vehicle speed is extracted. At least one vehicle sensor of the vehicle acquires measurement data. Newly acquired measurement data is provided to the device 1 for tracking the objects. The device 1 may be located in the vehicle. At least some functions of the device 1 can also be located outside of the vehicle, e.g., in a distant server.

In a second step S2, the device 1 determines time coordinates and spatial coordinates (i.e., a measurement frame) of newly measured objects in a surrounding of the vehicle based on the newly acquired measurement data. The time coordinates may simply be timestamps. The spatial coordinates of the newly measured objects are defined relative to a global coordinate system. The spatial coordinates may first be defined in a non-global coordinate system and may then be transformed into the global coordinate system.

Together with the measurement data, the ego vehicle pose is tracked in the global coordinate system (i.e., common or "world" coordinate system) for each time instant where measurements are taken.

Moreover, a proper calibration may be required to be able to do affine transformation based coordination system changes between sensor coordinate systems, the space-time representation and the transformation into the global coordinate system.

In a step S3, the device 1 associates each newly measured object with at most one tracked object of a plurality of tracked objects based on distances between the newly measured object and the plurality of tracked objects. The distance depends on both a difference between the spatial coordinates of the newly measured object and the tracked object under consideration and a difference between the time coordinates of the newly measured object and the tracked object under consideration.

The difference between the time coordinates can be set to 0 in the first iteration and can otherwise be set to the difference between a current timestamp and a stored timestamp.

It can also be possible to store a 4-dimensional vector {x, y, z, vt} associated with each newly acquired object, comprising the spatial coordinates x, y, z and a parameter

$$vt = (deltaT \cdot ego\ vehicle\ speed - length\ value),$$

where deltaT corresponds to the difference between a current timestamp and a stored timestamp and the length value is set based on a length of the vehicle. The transformed measurement frame {x, y, z, vt} is pushed into the memory storage 3.

In a fourth step S4, the spatial coordinates of the tracked objects are updated, using a Kalman filtering method. In space-time tracking, the past information is used to stabilize the association step of the selected Kalman filter, by the movement derived from the state change of the continuously updated tracklet (tracked object).

Object detectors do have some noise arising from the measuring technique. Also, the tracking process can have ambiguity. These have to be modeled, a common choice is to use an additional Normal distribution, and both have a dataset dependent hyperparameter (variance). The tracking is based on Kalman filtering. Herein, the state-transition model, the observation model, the measurement noise and the process noise are identical to the standard Kalman filtering method. The noises can be the above-mentioned normal distributions, e.g., with a variance of 0.01, and a constant state-transition model can be used.

In the Kalman-update step, the current tracked state of the object is updated. Herein, the associated newly measured object relates to new measurements taken into account in the Kalman method. If there is no match for some newly measured object, a new tracked object is generated. If none of the newly measured objects is associated with one of the existing tracked objects, the tracked object is deleted.

Optionally, for currently available tracked objects, further classification can be applied. the classification can be dynamic or static, depending on the tracked object attributes available in Kalman filter inner states, e.g., momentum or speed.

The method can then repeat again from step S1.

**Claims**

1. A device (1) for tracking objects in a surrounding of a vehicle, comprising:

    an interface (2) configured to receive, from at least one vehicle sensor (5) of the vehicle, newly acquired measurement data; and
    a computing device (4) configured to:

        determine time coordinates and spatial coordinates of newly measured objects in a surrounding of the vehicle based on the newly acquired measurement data, wherein the spatial coordinates of the newly measured objects are defined relative to a global coordinate system;
        associate each newly measured object with at most one tracked object (21-24) of a plurality of tracked objects (21-24) based on distances between the newly measured object and the plurality of tracked objects (21-24), wherein the distance depends on both a difference between the spatial coordinates of the newly measured object and the tracked object and a difference between the time coordinates of the newly measured object and the tracked object; and

update spatial coordinates of the tracked objects (21-24) using a Kalman filtering method, using the associated newly measured objects;

**characterized in that** the distance D between a newly measured object and a tracked object (21-24) is computed by the following formula:

$$D^2 = dx^2 + dy^2 + dz^2 - (vt)^2,$$

wherein $dx$, $dy$ and $dz$ denote differences between the spatial coordinates of the newly measured object and the tracked object (21-24) for three orthogonal axes of the global coordinate system, wherein v denotes a velocity of the vehicle, and wherein t denotes a difference between the temporal coordinate of the newly measured object and the tracked object (21-24).

2. The device (1) according to claim 1, wherein the computing device (4) is configured to determine the global coordinate system as a current pose of the vehicle, based on a current velocity of the vehicle.

3. The device (1) according to claim 1 or 2, wherein the computing device (4) is configured to associate the newly measured object with the at most one tracked object (21-24) using the Hungarian method.

4. The device (1) according to any of the preceding claims, further comprising a first-in first-out, FIFO, memory device (3), wherein the computing device (4) is configured to store the time coordinates and spatial coordinates of newly measured objects in the FIFO memory device (3).

5. The device (1) according to any of the preceding claims, wherein the computing device (4) is further configured to transform spatial coordinates of the plurality of tracked objects (21-24) into the global coordinate system before associating each newly measured object with at most one tracked object (21-24) of the plurality of tracked objects (21-24).

6. The device (1) according to any of the preceding claims, wherein the computing device (4) is further configured to generate a new tracked object (21-24) if a newly measured object is not associated with a tracked object (21-24) of the plurality of tracked objects (21-24).

7. The device (1) according to any of the preceding claims, wherein the computing device (4) is further configured to delete a tracked object (21-24) of the plurality of tracked objects (21-24) if no newly measured object is associated with the tracked object (21-24).

8. A driver assistance system (6) for a vehicle, comprising

at least one vehicle sensor (5) of the vehicle, configured to acquire measurement data; and a device (1) for tracking objects in a surrounding of a vehicle according to any of the preceding claims.

9. A method for tracking objects in a surrounding of a vehicle, comprising the following steps:

receiving (S1), from at least one vehicle sensor (5) of the vehicle, newly acquired measurement data;

determining (S2) time coordinates and spatial coordinates of newly measured objects in a surrounding of the vehicle based on the newly acquired measurement data, wherein the spatial coordinates of the newly measured objects are defined relative to a global coordinate system;

associating (S3) each newly measured object with at most one tracked object (21-24) of a plurality of tracked objects (21-24) based on distances between the newly measured object and the plurality of tracked objects (21-24), wherein the distance depends on both a difference between the spatial coordinates of the newly measured object and the tracked object and a difference between the time coordinates of the newly measured object and the tracked object; and

updating (S4) spatial coordinates of the tracked objects (21-24) using a Kalman filtering method, using the associated newly measured objects;

**characterized in that** the distance D between a newly measured object and a tracked object (21-24) is computed by the following formula:

$$D^2 = dx^2 + dy^2 + dz^2 - (vt)^2,$$

wherein *dx, dy* and *dz* denote differences between the spatial coordinates of the newly measured object and the tracked object (21-24) for three orthogonal axes of the global coordinate system, wherein v denotes a velocity of the vehicle, and wherein t denotes a difference between the temporal coordinate of the newly measured object and the tracked object (21-24).

**Patentansprüche**

1. Vorrichtung (1) zur Verfolgung von Objekten in einer Umgebung eines Fahrzeugs, umfassend:

   eine Schnittstelle (2), die dazu ausgelegt ist, von mindestens einem Fahrzeugsensor (5) des Fahrzeugs neu erfasste Messdaten zu empfangen; und
   eine Rechenvorrichtung (4), die zu Folgendem ausgelegt ist:

   Bestimmen von Zeitkoordinaten und räumlichen Koordinaten neu gemessener Objekte in einer Umgebung des Fahrzeugs basierend auf den neu erfassten Messdaten, wobei die räumlichen Koordinaten der neu gemessenen Objekte relativ zu einem globalen Koordinatensystem definiert sind;
   Zuordnen jedes neu gemessenen Objekts zu höchstens einem verfolgten Objekt (21-24) einer Mehrzahl verfolgter Objekte (21-24) basierend auf Abständen zwischen dem neu gemessenen Objekt und der Mehrzahl verfolgter Objekte (21-24), wobei der Abstand von sowohl einer Differenz zwischen den räumlichen Koordinaten des neu gemessenen Objekts und des verfolgten Objekts als auch einer Differenz zwischen den Zeitkoordinaten des neu gemessenen Objekts und des verfolgten Objekts abhängt; und
   Aktualisieren räumlicher Koordinaten der verfolgten Objekte (21-24) unter Verwendung eines Kalman-Filterverfahrens unter Verwendung der zugeordneten neu gemessenen Objekte; und
   **dadurch gekennzeichnet, dass** der Abstand D zwischen einem neu gemessenen Objekt und einem verfolgten Objekt (21-24) durch die folgende Formel berechnet wird:

   $$D^2 = dx^2 + dy^2 + dz^2 - (vt)^2,$$

   wobei dx, dy und dz Differenzen zwischen den räumlichen Koordinaten x, y, z des neu gemessenen Objekts und des verfolgten Objekts (21-24) für drei orthogonale Achsen des globalen Koordinatensystems bezeichnen, wobei v eine Geschwindigkeit des Fahrzeugs bezeichnet, und wobei t eine Differenz zwischen der Zeitkoordinate des neu gemessenen Objekts und des verfolgten Objekts (21-24) bezeichnet.

2. Vorrichtung (1) nach Anspruch 1, wobei die Rechenvorrichtung (4) ferner dafür ausgelegt ist, das globale Koordinatensystem als eine aktuelle Lage des Fahrzeugs basierend auf einer aktuellen Geschwindigkeit des Fahrzeugs zu bestimmen.

3. Vorrichtung (1) nach Anspruch 1 oder 2, wobei die Rechenvorrichtung (4) dazu ausgelegt ist, das neu gemessene Objekt mit dem höchstens einen verfolgten Objekt (21-24) unter Verwendung des Ungarischen Verfahrens zu assoziieren.

4. Vorrichtung (1) nach einem der vorhergehenden Ansprüche, die ferner eine FIFO-Speichervorrichtung (3) (First-in-First-Out) umfasst, wobei die Rechenvorrichtung (4) dazu ausgelegt ist, die Zeitkoordinaten und räumlichen Koordinaten neu gemessener Objekte in der FIFO-Speichervorrichtung (3) zu speichern.

5. Vorrichtung (1) nach einem der vorhergehenden Ansprüche, wobei die Rechenvorrichtung (4) ferner dazu ausgelegt ist, räumliche Koordinaten der Mehrzahl verfolgter Objekte (21-24) in das globale Koordinatensystem zu transformieren, bevor jedes neu gemessene Objekt mit höchstens einem verfolgten Objekt (21-24) der Mehrzahl verfolgter Objekte (21-24) assoziiert wird.

6. Vorrichtung (1) nach einem der vorhergehenden Ansprüche, wobei die Rechenvorrichtung (4) ferner dazu ausgelegt ist, ein neues verfolgtes Objekt (21-24) zu erzeugen, wenn ein neu gemessenes Objekt keinem verfolgten Objekt (21-24) der Mehrzahl verfolgter Objekte (21-24) zugeordnet wird.

7. Vorrichtung (1) nach einem der vorhergehenden Ansprüche, wobei die Rechenvorrichtung (4) ferner dazu ausgelegt ist, ein verfolgtes Objekt (21-24) der Mehrzahl verfolgter Objekte (21-24) zu löschen, wenn kein neu gemessenes Objekt mit dem verfolgten Objekt (21-24) assoziiert ist.

8. Fahrerassistenzsystem (6) für ein Fahrzeug, umfassend:

mindestens einen Fahrzeugsensor (5) des Fahrzeugs, der dazu ausgelegt ist, Messdaten zu erfassen; und eine Vorrichtung (1) zum Verfolgen von Objekten in einer Umgebung eines Fahrzeugs nach einem der vorhergehenden Ansprüche.

9. Verfahren zum Verfolgen von Objekten in einer Umgebung eines Fahrzeugs, umfassend die folgenden Schritte:

Empfangen (S1) neu erfasster Messdaten von mindestens einem Fahrzeugsensor (5) des Fahrzeugs; Bestimmen (S2) von Zeitkoordinaten und räumlichen Koordinaten neu gemessener Objekte in einer Umgebung des Fahrzeugs basierend auf den neu erfassten Messdaten, wobei die räumlichen Koordinaten der neu gemessenen Objekte relativ zu einem globalen Koordinatensystem definiert sind; Zuordnen (S3) jedes neu gemessenen Objekts zu höchstens einem verfolgten Objekt (21-24) einer Mehrzahl verfolgter Objekte (21-24) basierend auf Abständen zwischen dem neu gemessenen Objekt und der Mehrzahl verfolgter Objekte (21-24), wobei der Abstand von sowohl einer Differenz zwischen den räumlichen Koordinaten des neu gemessenen Objekts und dem verfolgten Objekt als auch einer Differenz zwischen den Zeitkoordinaten des neu gemessenen Objekts und des verfolgten Objekts abhängt; und Aktualisieren (S4) räumlicher Koordinaten der verfolgten Objekte (21-24) unter Verwendung eines Kalman-Filterverfahrens unter Verwendung der zugeordneten neu gemessenen Objekte; **dadurch gekennzeichnet, dass** der Abstand D zwischen einem neu gemessenen Objekt und einem verfolgten Objekt (21-24) durch die folgende Formel berechnet wird:

$$D^2 = dx^2 + dy^2 + dz^2 - (vt)^2,$$

wobei dx, dy und dz Differenzen zwischen den räumlichen Koordinaten x, y, z des neu gemessenen Objekts und des verfolgten Objekts (21-24) für drei orthogonale Achsen des globalen Koordinatensystems bezeichnen, wobei v eine Geschwindigkeit des Fahrzeugs bezeichnet, und wobei t eine Differenz zwischen der Zeitkoordinate des neu gemessenen Objekts und des verfolgten Objekts (21-24) bezeichnet.

## Revendications

1. Dispositif (1) de détection d'objets aux environs d'un véhicule, comprenant :

une interface (2) configurée pour recevoir, en provenance d'au moins un capteur (5) de véhicule du véhicule, des données de mesure nouvellement acquises ; et un dispositif informatique (4) configuré pour :

déterminer des coordonnées temporelles et des coordonnées spatiales d'objets nouvellement mesurés aux environs du véhicule d'après les données de mesure nouvellement acquises, les coordonnées spatiales des objets nouvellement mesurés étant définies par rapport à un système de coordonnées global ; associer chaque objet nouvellement mesuré à au plus un objet suivi (21-24) d'une pluralité d'objets suivis (21-24) sur la base de distances entre l'objet nouvellement mesuré et la pluralité d'objets suivis (21-24), la distance dépendant à la fois d'une différence entre les coordonnées spatiales de l'objet nouvellement mesuré et de l'objet suivi et d'une différence entre les coordonnées temporelles de l'objet nouvellement mesuré et de l'objet suivi ; et mettre à jour des coordonnées spatiales des objets suivis (21-24) à l'aide d'un procédé de filtrage de Kalman, en utilisant les objets nouvellement mesurés associés ; **caractérisé en ce que** la distance D entre un objet nouvellement mesuré et un objet suivi (21-24) est calculée par la formule suivante :

$$D^2 = dx^2 + dy^2 + dz^2 - (vt)^2,$$

où *dx, dy* et *dz* désignent des différences entre les coordonnées spatiales de l'objet nouvellement mesuré et de l'objet suivi (21-24) pour trois axes orthogonaux du système de coordonnées global, v désignant une vitesse du véhicule, et t désignant une différence entre les coordonnées temporelles de l'objet nouvellement mesuré et de l'objet suivi (21-24).

2.  Dispositif (1) selon la revendication 1, le dispositif informatique (4) étant configuré pour déterminer le système de coordonnées global en tant que pose actuelle du véhicule, sur la base d'une vitesse actuelle du véhicule.

3.  Dispositif (1) selon la revendication 1 ou 2, le dispositif informatique (4) étant configuré pour associer l'objet nouvellement mesuré à l'au plus un objet suivi (21-24) en utilisant la méthode hongroise.

4.  Dispositif (1) selon l'une quelconque des revendications précédentes, comprenant en outre un dispositif (3) de mémoire premier entré, premier sorti, FIFO, le dispositif informatique (4) étant configuré pour stocker les coordonnées temporelles et les coordonnées spatiales d'objets nouvellement mesurés dans le dispositif (3) de mémoire FIFO.

5.  Dispositif (1) selon l'une quelconque des revendications précédentes, le dispositif informatique (4) étant en outre configuré pour transformer les coordonnées spatiales de la pluralité d'objets suivis (21-24) vers le système de coordonnées global avant d'associer chaque objet nouvellement mesuré à au plus un objet suivi (21-24) de la pluralité d'objets suivis (21-24).

6.  Dispositif (1) selon l'une quelconque des revendications précédentes, le dispositif informatique (4) étant en outre configuré pour générer un nouvel objet suivi (21-24) si un objet nouvellement mesuré n'est pas associé à un objet suivi (21-24) de la pluralité d'objets suivis (21-24).

7.  Dispositif (1) selon l'une quelconque des revendications précédentes, le dispositif informatique (4) étant en outre configuré pour supprimer un objet suivi (21-24) de la pluralité d'objets suivis (21-24) si aucun objet nouvellement mesuré n'est associé à l'objet suivi (21-24).

8.  Système (6) d'aide à la conduite pour véhicule, comprenant

    au moins un capteur (5) de véhicule du véhicule, configuré pour acquérir des données de mesure ;
    et un dispositif (1) de détection d'objets aux environs d'un véhicule selon l'une quelconque des revendications précédentes.

9.  Procédé de détection d'objets aux environs d'un véhicule, comprenant les étapes suivantes :

    la réception (S1), en provenance d'au moins un capteur (5) de véhicule du véhicule, de données de mesure nouvellement acquises ;
    la détermination (S2) de coordonnées temporelles et de coordonnées spatiales d'objets nouvellement mesurés aux environs du véhicule d'après les données de mesure nouvellement acquises, les coordonnées spatiales des objets nouvellement mesurés étant définies par rapport à un système de coordonnées global ;
    l'association (S3) de chaque objet nouvellement mesuré à au plus un objet suivi (21-24) d'une pluralité d'objets suivis (21-24) sur la base de distances entre l'objet nouvellement mesuré et la pluralité d'objets suivis (21-24), la distance dépendant à la fois d'une différence entre les coordonnées spatiales de l'objet nouvellement mesuré et de l'objet suivi et d'une différence entre les coordonnées temporelles de l'objet nouvellement mesuré et de l'objet suivi ; et
    la mise à jour (S4) de coordonnées spatiales des objets suivis (21-24) à l'aide d'un procédé de filtrage de Kalman, en utilisant les objets nouvellement mesurés associés ;
    **caractérisé en ce que** la distance D entre un objet nouvellement mesuré et un objet suivi (21-24) est calculée par la formule suivante :

$$D^2 = dx^2 + dy^2 + dz^2 - (vt)^2,$$

    où *dx, dy* et *dz* désignent des différences entre les coordonnées spatiales de l'objet nouvellement mesuré et de l'objet suivi (21-24) pour trois axes orthogonaux du système de coordonnées global, v désignant une vitesse du véhicule, et t désignant une différence entre les coordonnées temporelles de l'objet nouvellement mesuré et de l'objet suivi (21-24).

## Fig. 1

## Fig. 2

## Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10936902 B1
- US 20210080558 A1
- US 20160103213 A1